# EUROPEAN PATENT APPLICATION

(11) **EP 2 549 282 A1**
(43) Date of publication of application: **23.01.2013**
(21) Application number: 11174549.3
(22) Date of filing: 19.07.2011
(51) Int. Cl.: G01R 31/26, G01R 31/40

(54) **Apparatus and method for contacting a solar cell**

(71) Applicant: Pasan Sa, 2000 Neuchâtel (CH)
(72) Inventor: Richter, André, 3600 Thun (CH)
(74) Representative: Patentbüro Paul Rosenich AG

(57) **Abstract**

The invention relates to an apparatus (12) for electrically contacting a solar cell (1) or a solar cell module (5), particularly for testing its performance, the solar cell (1) or the solar cell module (5) having an electrical contact (2), the apparatus (12) comprising:
a receiving volume for receiving a solar cell (1) or a solar cell module (5),
at least one fluid space for receiving an electrically conducting fluid (15), the fluid space being arranged with respect to the receiving volume such that a fluid (15) in the fluid space at least partially covers an electrical contact (2) of a solar cell (1) or a solar cell module (5) when being received by the receiving volume, and
electrical transmitting means (18; 19, 20) for connecting the fluid (15) in the fluid space with a measurement device (I, U) in an electrically conducting manner.

## Description

The invention relates to an apparatus and a method for electrically contacting a solar cell or a solar cell module, particularly for testing its performance.

Photovoltaic cells, also called solar cells, are semiconductor devices which transform light into electrical power. Today's market is dominated by crystalline solar cells, which consist of doped silicon wafers. In order to establish electrical contact with such cells, a metallization layer is applied on the backside and on the topside of these wafers. Usually the backside metallization covers the whole backside area whilst the topside metallization consists of very narrow fingers and two or more bus bars.

In order to get higher power, solar cells are interconnected and assembled in solar cell modules. These solar cell modules consist of several cells, which are electrically connected in series. To do so, the topside metallization of one cell is linked to the backside metallization of the adjacent cell, using metal ribbons. These ribbons are usually soldered on the cells in order to minimize contact resistivity and to provide an uniform electrical contact quality over the whole bus bar length.

At the end of the cell production, and before the cells are assembled in solar cell modules, the solar cells are tested in order to determine their quality.

W02011063318A2 discloses an apparatus for measuring performance of a solar cell module having a light source and a detector means. For safely moving and evaluating solar cell modules without substantially obstructing light measurements through the module a fluid flow is provided to support a solar cell module above a transparent sheet. It is possible to illuminate the solar cells of the module from below. The fluid solely acts as an auxiliary transport means.

Several measurement technologies exist to evaluate different cell properties. For some of these measurement technologies, the cells have to be electrically connected with a measuring device. Two of the best known measurements of this kind are the Electroluminescence imaging and the IV-curve measurement, the latter using a sun simulator.

Electroluminescence imaging is an imaging technology which uses the inverse principle of photovoltaic cells: instead of using photons to free electrons, a current is imposed on the cell and photons are created in the active areas of the cell. The active area is the entire cell surface facing the sun (topside). The emitted photons can be visualized by use of digital cameras. The goal of this measurement is to detect where cracks are in the cells: where there are cracks, no or very little electrical current flows and (much) less photons are emitted from the corresponding area of the cell. Therefore cracks appear as dark lines on the images taken with a digital camera. As can be seen from such electroluminescence images, other regions may appear dark as well. This is due to grain boundaries and the individual orientation of the crystals.

The measurement setup consists in an electronic contacting system for the cell and a camera system. The whole system has to be installed in a dark room in order to be able to detect the very low intensity electroluminescence radiation.

Another method for measuring the performance of solar cells is the IV-curve measurement. This is a functional indoor test of the cell, which uses a sun-like light source, an electric contacting system and electronic measuring equipment. The cell is connected to the measuring device and during the sun-like illumination of the cell, electrical measurements are performed. An active electronic load sweeps the whole range of electric loads (from short circuit to open circuit) in order to collect the current v.s. voltage curve of the the cell.

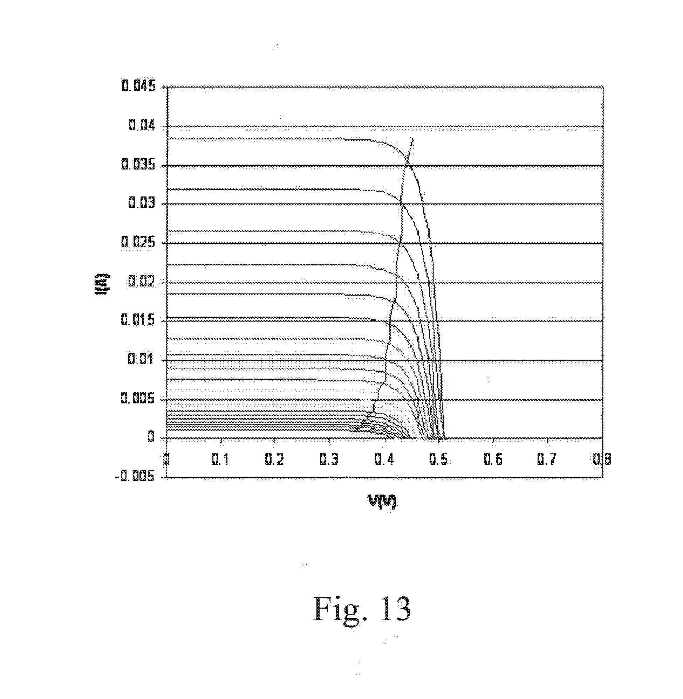

In photovoltaic industry, sun simulators (also called flashers) are used in order to qualify the manufactured solar cells and solar cell modules. Sun simulators are artificial light sources simulating the sunlight or a standardized spectrum as closely as possible. In addition, a voltage (V) or current (I) is applied to the device under test (DUT). During testing, the other quantity (current or voltage, respectively) is read out to obtain I/V-points. These points may be formed into a I/V diagram from which the maximum power point (Mpp) is determined. The Mpp is a measure for the efficiency of the DUT, so basically not all points on the I/V-curve are needed. In Fig. 13, the I/V curves for different illumination strengths are shown as an example. The vertical line connects the Mpp's of the individual curves.

During the design process of such sun simulators, special care is taken to their light spectrum, light intensity and to the homogeneity of the light intensity on the DUT.

For some cell technologies, for example the heterojunction cells or dye-sensitized cells, the duration of illumination is an important parameter: accurate measurement of these devices may require measurement periods from one tenth of a second to several seconds. For normal crystalline cells, the DUT is illuminated for some milliseconds to some tens of milliseconds. In both cases this period is the time needed to sweep thru all measurement points: e.g. the voltage applied is varied from 0 to 0.6V in steps of 0.05 V and the current is measured. Also the current could be swept.

Determining the Mpp is a part of the efficiency measurement: It is the maximum converted power. Efficiency is the converted power (electric) divided by the incident power (light).

Normal solar cells have an edge isolation. After the n-type layer has been doped in the p-type silicon, the n-type layer extends around the cell, connecting the fingers (silver contacts on the front) to the back contact. In order to open this short circuit situation, a part of the n-type layer is removed, e.g. by plasma etching or by laser. This lasered trench runs around the complete perimeter of the cell.

Possible (other) edge isolation techniques are:
1.Trenching with a laser on the front side,
2.Trenching with a laser on the back side (which is preferred, since no active area is lost),
3.Sawing trenches in the front side,
4.Sawing trenches in the back side before/after
5.printing,
6.Grinding with sandpaper,
7.Grinding with a beltsander,
8.Plasma etching,

For both of these measurements, electroluminescence imaging and I/V-curve measurements, it is important to have an electric contact system which covers a minimum of the cell's active area on the topside or at least not more than the ribbons used to interconnect cells in the final module do. An optimal electric contact system should thus be restricted to "inactive areas" (backside and bus bars and fingers) of the cell and cast only a minimum of shadows on the active area (topside between the metal contacts).

Furthermore, it is important for IV-curve measurements to have electrical contacting properties which are very similar to the use of soldered ribbons. Contact resistivity has to be very low and the contact points should be equally distributed over the whole bus bar since the bus bars alone has a rather high electrical resistance.

In prior art, three main approaches exist for electronic contacting of solar cells. All of them use mechanical contacts.

Spring probes consist of a plurality of needle pins, guided in a tube and preloaded by springs. For contacting a solar cell's bus bar, several of these spring probes are aligned over the bus bar and fixed on a fixation bar. Such designs require many delicate assembly steps. The needle pins are very delicate and easily damaged. The cross section of the contact areas is also very small as compared to that of ribbons connected to the bus bar. Like in other prior art systems the positioning of the spring probes above the solar cell has to be repeated for each bus bar.

Alternatively, bent metallic wires can be used which are aligned on the bus bar. They are supported outside the cell area in order to minimize the cast shadows on the solar cell. Precise alignment of the wire tips on the bus bar requires a delicate assembly. Again, the cross section of the contact is very small.

Another method known from the Indian patent application 804/DEL/2011 comprises integrated contacts. The whole contacting device is cut from one piece of material. A plurality of tilted blades extend downwards from a bar structure towards the bus bars. In this way the blades can be formed efficiently and other functions can be integrated as well such as the two horizontal beams on the left and the right that attach the middle part to the supporting e.g. L-shaped holders on each side.

All prior art electrical contacting methods use localized mechanical contacts. These contacts are very usually rather small, producing only a small contact areas at the contact point. Bad contacts adversely influence the quality of measurements. For a voltage measurement (Current = 0 Ampere) one measuring point would be enough. However, when measuring current, the current has to be supported and no losses (heating up, contact resistance, improper surface alignment etc.) should be created that would impair the accuracy of the measurement. Contacts with a small cross section usually cannot fulfil these requirements for modern cell technologies. Furthermore, mechanical contacts are delicate to produce and also to align with respect to the bus bars of the solar cell. Due to their small dimensions they are easily damaged. It is also possible that mechanical contacting causes damages to the surface structure of a solar cell, when not perfectly aligned with respect to the bus bars or when no bus bar is present at all. Generally, a local force is applied to the solar cell during contacting causing a downward bending of the cell. This is very disadvantageous, particularly, in the case of cells with great dimensions. In any case, mechanical contacts cause a partial shading of the active area of the solar cell which is a problem when testing without bus bars.

The object of the invention is to overcome these problems and to provide an apparatus and a method for contacting a solar cell or a solar cell module, e.g. for testing purposes, which eliminates the disadvantageous effects of prior art contacting methods. The inventive solution should provide a good and homogeneous electrical contact over the whole solar cell. Shading of the active area of the solar cell should be avoided. No local mechanical force should be applied to the cell.

This object is achieved by an apparatus for electrically contacting a photovoltaic device, e.g. a solar cell or a solar cell module, particularly for testing its performance, the solar cell or the solar cell module having an electrical contact area, the apparatus comprising:
a receiving volume for at least partially receiving the photovoltaic device,
at least one fluid space for receiving an electrically conducting fluid, the fluid space being arranged with respect to the receiving volume such that a fluid in the fluid space at least partially covers the electrical contact area of the photovoltaic device when being received by said receiving volume, and
electrical transmitting means for connecting the fluid in the fluid space with a measurement device in an electrically conducting manner.

The term "receiving volume" has to be understood as a closed or open volume or space which is capable of at least partially receiving the photovoltaic device within the contacting apparatus. The receiving volume may be defined by a receiving structure, such as a container, a chamber, a receptacle, a base plate, a conveyor belt, any other supporting or holding means or by the volume of the photovoltaic device itself.

The "fluid space" for receiving the electrically conducting fluid may be any space within the apparatus, which is capable of containing fluid at least temporarily. As described in the following, the fluid space can be a fluid chamber enclosing the fluid. However, it would be also possible to continuously transport a fluid towards the solar cell so as to form a fluid film on its surface. For this purpose a plurality of nozzles may be located in a base plate. The nozzles may at the same time act as electrodes.

A photovoltaic device may be or comprise e.g. a wafer, a solar cell, a string or array of solar cells, a solar cell module or subassembly thereof or any combination thereof. Multiple interconnected cells may be contacted as a whole or only a subset thereof may be contacted.

A electrical contact area of the photovoltaic device may contain e.g. a bus bar, a finger, an area of the photovoltaic device such as part of its active surface, a connector for interconnecting ribbons or any combination thereof.

According to the inventive solution, a liquid fluid is used to contact at least the plus or minus electrical contact of the photovoltaic device. The main advantage of the invention consists in the fact that no pressure is applied to the cell, thus preventing damaging of the cell. A further advantage is that the current is homogeneously picked up from the complete surface (that may be open; e.g. if the silizium is not covered by a protective layer) of the cell. If, for example, no fingers and/or bus bars are present on the cell or if they are not (yet) made thick enough to support the current, large currents can still be transported of the cell with the inventive method. If the fingers or bus bars are thin (e.g. in the middle of the production of normal cells or because new technologies do not require thick bus bars or fingers at all), the electrical resistance in the bus bars and fingers is too large to make reliable measurements. Also, thin bus bars and/or fingers can be damaged by the large applied current because they get too hot. In new cells, for example, bus bars and fingers may be omitted completely. This is e.g. the case if a TCO (transparent conductive oxide) layer is applied to the topside of the cell (sunny side). The TCO layer may, for example, be made of ITO (Indium Tin Oxide). In a later stage of production, metal conductors are attached to the cell to collect all charges and transport them from the cell. As long as those conductors are not present, the current cannot flow from the cell because the resistance of the TCO layer is too high. This would adversely influence the measurement. As already discussed above efficiency is measured for the current in the Mpp. If the current is hindered by the large resistance of the contacts, output voltage of the cell will increase (current times resistance of the TCO layer) and Mpp cannot be determined under the same conditions as the cell will be used later during operation. In new cells, for example, bus bars and fingers may be omitted completely.

A further advantage of the invention consists in the fact, that the cell is not deformed (bent) by the contacting means, leading to more accurate measurements. The goal is to contact the cells for picking up current mainly without applying any local force on the cell, such as would be the case with contacting means according to the state of the art. Because of tolerances in mechanical contacting systems, it is difficult to contact structures such as fingers with small width.

Further, because of the good heat transfer of the contacting fluid, the cells can be measured at a controlled temperature. Heating effects are avoided by cooling the cell in the fluid and exchange the heat in an external heat exchanger.

In an embodiment the apparatus comprises a conveyor system for moving the photovoltaic device, wherein preferably the conveyor system is based on moving the electrically conducting fluid.

Also the fluid system helps to build a conveyer system based on fluid control. The cells may be stopped by pulling it to the base of the transporting means. A fluid conveyor system may be used for push/pull the photovoltaic device to the base and for moving it forward and in other different directions e.g. by inclined nozzles.

Another big advantage is the refractive control. Because the refractive index of the fluid can be adapted to the later use of encapsulant film on the photovoltaic device, the cell is measured with the proper reflection grade. Today cells are measures in air, but in the module the cells have an interface to the encapsulant. This changes the properties and is part of the typical "cell-to-module" losses. Clearly the properties of the fluid have to be chosen such as to mimic the materials used for the module.

The term solar cell and solar module may refer to any technology including crystalline and thin film technologies and combinations thereof.

The inventive method allows both, performing electroluminescence and measuring of I/V-curves. But also other measurements can be done, where the cell should be electrically contacted at one or both sides, with one or multiple polarities and for current and/or voltage connections. The term "measurement device" as used in this description and claims may therefore be understood as measurement detector (e.g. voltmeter and/or ampere meter) and/or as measurement power supply (e.g. voltage source and/or current source).

As already mentioned above cracks in the solar cell may interrupt the local flow of charge carriers. With the inventive method the current does no longer flow thru the bus bars and fingers and is therefore not necessarily blocked by cracks.

If a cell with two contact sides has a crack that extends in the plane of the cell itself, it is in most cases not possible to detect it with standard contacting means, since the current flows parallel to the cell. Using the inventive solution, the currents flow perpendicularly out of the cell, so that these cracks are better visible in electroluminescence images and the crack will have bigger impact on IV curve measurements.

In an embodiment the apparatus comprises a base for supporting the solar cell or the solar cell module when being received by the receiving volume. The backside of the solar cell(s) may rest on the base, while the fluid of an upper fluid chamber covers the topside of the solar cells(s). In such a way, the topside is not shaded, since a transparent fluid is used for electrical connection.

In an embodiment the fluid space is formed by a fluid chamber. It is of course possible to continuously transport a liquid fluid to the surface(s) of the solar cell, e.g. by a nozzle arrangement to create a conducting film. However, a fluid chamber allows to retain the fluid, which is much more feasible.

In an embodiment the base is formed by the base plate of a fluid chamber. Here, the base has two functions: mechanical support for the solar cell(s) and being part of the fluid chamber.

In an embodiment the apparatus comprises two fluid spaces for contacting different electrical contacts of a solar cell or the solar cell module, the fluid spaces being separated from each other. One of the fluid spaces is used to contact the plus (+) contact of the cell(s) and the other fluid space is used to contact the minus (-) contact of the cell(s). This would lead to a completely zero-force contacting method.

In an embodiment the fluid spaces are arranged at opposite sides of the receiving volume, such that the fluids cover opposite sides of the solar cell or the solar cell module. This allows an effective separation of the fluids, which have to be electrically isolated from each other. As will be described below, this electrical isolation between the fluids need not be perfect.

In an embodiment the apparatus comprises mechanical contacting means for electrically contacting a different electrical contact of the solar cell or the solar cell module. It is possible to only contact the light sensitive topside by means of a fluid, while the backside may be contacted by mechanical means known from prior art.

In an embodiment the apparatus comprises at least one source of electromagnetic radiation, preferably a light source, and wherein preferably the source of electromagnetic radiation or an electromagnetic radiation conducting means being in communication with said source of electromagnetic radiation is directed to the receiving volume of the photovoltaic device.

In an embodiment the source of electromagnetic radiation or an electromagnetic radiation conducting means being in communication with said source of electromagnetic radiation is at least partially immersed in the fluid of the fluid space.

In an embodiment the apparatus comprises a light source and wherein preferably the light source or a light conducting means being in communication with said light source is directed to the receiving volume of the solar cell or the solar cell module. With such an arrangement I/V-curves may be collected. The light source is preferably adapted to emit the sun's spectrum or a standardized spectrum.

In an embodiment the light source or a light conducting means being in communication with said light source is at least partially immersed in the fluid space. Distortions due to surface waves of the fluid may be avoided by this solution.

In an embodiment the electrical transmitting means comprises at least one electrode which is at least partially immersed in said fluid space. The electrode provides a connection between the fluid and a measurement device.

In an embodiment the electrode is formed as a light reflector and arranged as to reflect the light, which is reflected from the solar cell or the solar cell module, back to the solar cell or the solar cell module. The electrode has two functions: collecting electrical charges and aiming light at the DUT.

In an embodiment the apparatus comprises at least one circulator pump for circulating the fluid within the fluid space. The temperature and concentration of the fluid bath may be effectively controlled by the circulation process. A filtration system keeps the fluid clean.

In an embodiment the base is formed with holes. This allows for contacting the backside of the solar cell(s) in an elegant way in one pole and two pole configuration. It is possible to cover every design of contact pattern at the back side.

In an embodiment the base is provided with means for abutting the solar cell or the solar cell module in a fluid-tight manner. This allows for efficiently electrically isolating the backside with the plus(+) contact from the topside with the minus (-) contact of the solar cell(s). In such a way a surface area of the cell is defined for receiving a fluid (getting in direct contact with that fluid), while the rest of the surface is prevented from being covered by the same fluid.

In an embodiment the apparatus comprises suction ducts for forcing the photovoltaic decive towards the base.

In an embodiment the holes in the base are connected to suction ducts for forcing the solar cell or the solar cell module towards the base. This allows for temporarily fixing the solar cell(s) on the base for measurement. They may be released easily as well, e.g. by slight overpressure.

A conveying system can be integrated by help of the fluid. Even a stack of cells can be already immersed in the fluid at one side, transport in the fluid one by one to the measuring point and transport by fluid control to a release place or release stack. When the measurement system is not operating and the same fluid is used in both chambers, the fluid system can be used for sound transportation.

In an embodiment the apparatus comprises a sealing adapted to seal through-contacts of a (back-contact) solar cell or a solar cell module from the fluid. In the case of back-contact solar cells both contacts, (+) and (-), are accessible from the backside. A sealing structure, e.g. from non-conducting pads or sheaths, extending and abutting to the backside of the cell may efficiently isolate the different contacts from each other. In this way the cell may still be contacted from two sides without the through-contacts short circuiting the fluid spaces.

In an embodiment the apparatus comprises means for abutting the photovoltaic device in a fluid-tight manner. In an preferred embodiment the abutting means are adapted as to close the receiving volume. Abutting means may isolate different areas of the photovoltaic device from each other.

In an embodiment the apparatus comprises means for directing a jet of electrically conducting fluid onto the contact area of a photovoltaic device, wherein preferably the means for directing a jet of fluid is a nozzle.

In an embodiment the apparatus comprises contacting means by a jet of electrically conducting fluid for temporarily electrically contacting a different electrical contact of the photovoltaic device.

The objects are also achieved by a method for electrically contacting a photovoltaic device, in an apparatus according to any of the preceding claims, particularly for testing its performance, the photovoltaic device having an electrical contact area, the method comprising the steps of: providing an electrically conducting fluid in a fluid space and receiving a photovoltaic device in a receiving volume as to establish an electrical contact between the electrically conducting fluid with an electrical contact area of the photovoltaic device when being received by the receiving volume.

The temporal sequence of the steps of 1) providing an electrically conducting fluid in a fluid space, and 2) receiving a solar cell or a solar cell module by a receiving volume is not essential for the invention. It is possible to first place the photovoltaic device and then provide an electrically conducting fluid and it is also possible to first provide an electrically conducting fluid and then place the photovoltaic device with respect to that fluid. So, these steps may be reversed.

In an alternate embodiment the method for contacting a solar cell, comprises the steps of:
placing a solar cell or a solar cell module on a base, so that its first electrical contact is at least partially in contact with an electrically conductive fluid, its second electrical contact not being electrically in contact with that fluid,
contacting the fluid with an electrical conductor, e.g. an electrode,
contacting the second electrical contact of the solar cell either by a fluid, which is received in another fluid space, or by means of mechanical contacting means.

An alternate embodiment comprises the steps of
immersing s solar cell in an electrical conductive fluid,
forming two chambers so that fluid in one chamber is in electrical contact with a first electrical contact of the solar cell and fluid in the second chamber is in electrical contact with the second electrical contact of the solar cell, contacting the fluid in both chambers each with an electrical conductor, e.g. an electrode.

If both contacts of the cell are at the back side, the cell can be connected in the rear by two fluids, which are electrically insulated from each other. Optionally, the cells can be covered by an not electrically conductive fluid in the top fluid chamber to maintain the transportation, the heat control, the refractive control of the light.

It has to be made sure that the edge isolation of standard solar cells which separates the plus and minus poles (backside and topside) of the solar cells is not short-circuited by the fluid. The fluid of one chamber therefore may not extend over the edge isolation. With two fluid chambers there are mainly two ways of contacting the cell: A wall between the two fluid spaces covers the edge isolation, or the edge isolation is not in any of the two fluid spaces/chambers.

Clearly, walls between two chambers have to electrically isolate both fluid chambers.

Further embodiments of the invention are indicated in the figures and in the dependent claims. The list of reference marks forms part of the disclosure. The invention will now be explained in detail by the drawings. In the drawings:
Fig. 1 shows in topside and backside view a solar cell with contacting structures,
Fig. 2 shows a solar cell module comprising a plurality of solar cells,
Fig. 3, 4 and 5 show prior art methods for electrically contacting solar cells,
Fig. 6 shows an apparatus for testing performance of a solar cell according to the invention,
Fig. 7 shows an embodiment of the invention with the solar cell separating the fluid chambers,
Fig. 8 shows an embodiment with a light conducting means immersed in the fluid,
Fig. 9 shows an embodiment with sealings for the through contacts,
Fig. 10 shows an embodiment with connection wires running within the sealings,
Fig. 11 shows in detail the edge isolation of a standard solar cell and a sealing thereof,
Fig. 12 shows a back-contact cell type,
Fig. 13 shows I/V-curves with Mpp,
Fig. 14 shows an embodiment using a fluid jet,
Fig. 15 shows a variant of the embodiment of Fig. 10.

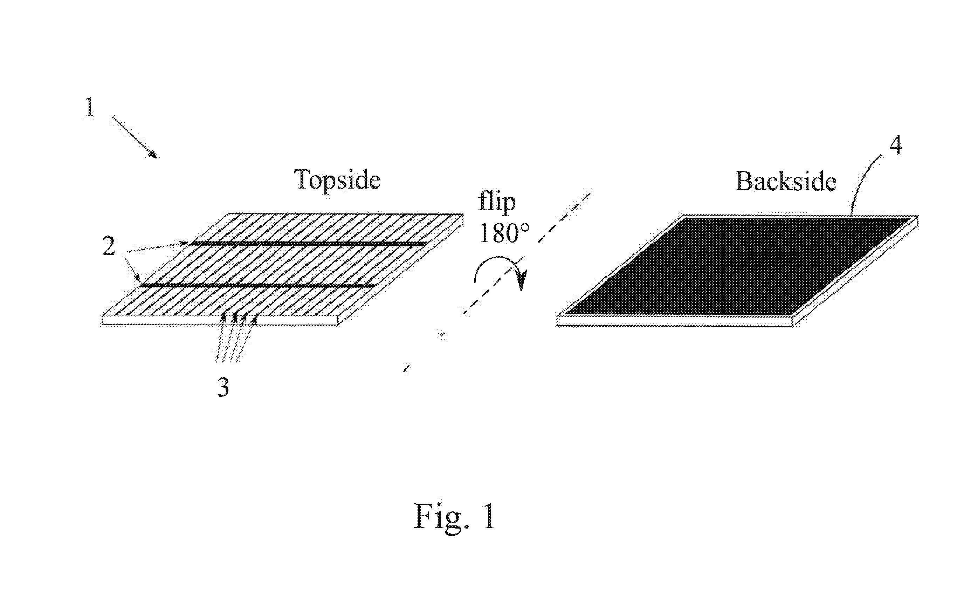

Fig. 1 shows in its left part a solar cell 1 having a plurality of electrically conducting fingers 3 joined by electrical contacts 2 in the form of bus bars for collecting the charges produced when illuminated. In the right part of Fig. 1 the backside of the solar cell 1 is shown with the backside contact 4. Usually the backside metallization covers the whole backside area whilst the topside metallization consists of very narrow fingers and two or more bus bars.

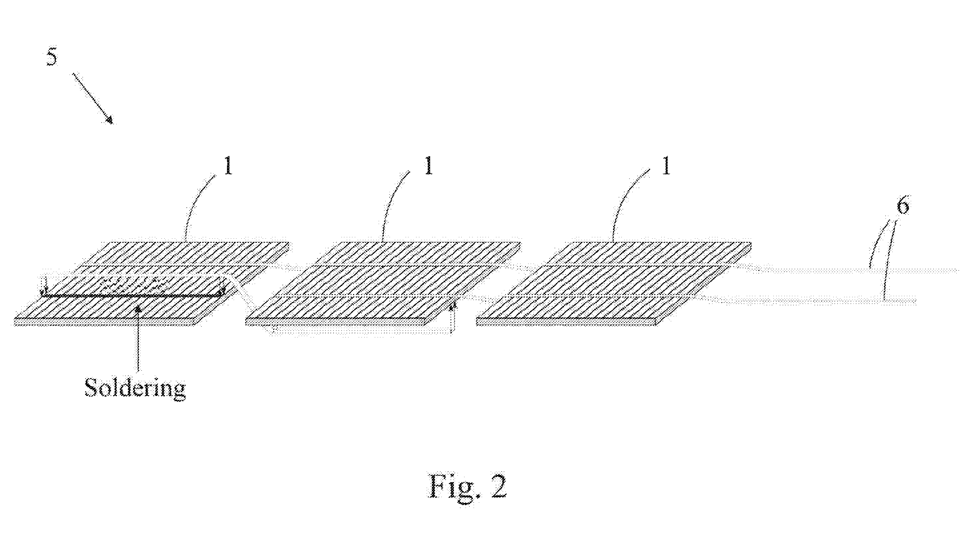

In order to get higher power, solar cells are interconnected and assembled in solar cell modules 5. Fig. 2 shows a string of interconnected solar cells 1. These solar cell modules consist of several solar cells 1, which are electrically connected in series. To do so, the topside contact 2 of one cell is linked to the backside contact 4 of the next cell, using metal ribbons 6. These ribbons 6 are usually soldered on the solar cells 1 in order to minimize contact resistivity and to get a uniform electrical contact over the whole bus bar 2.

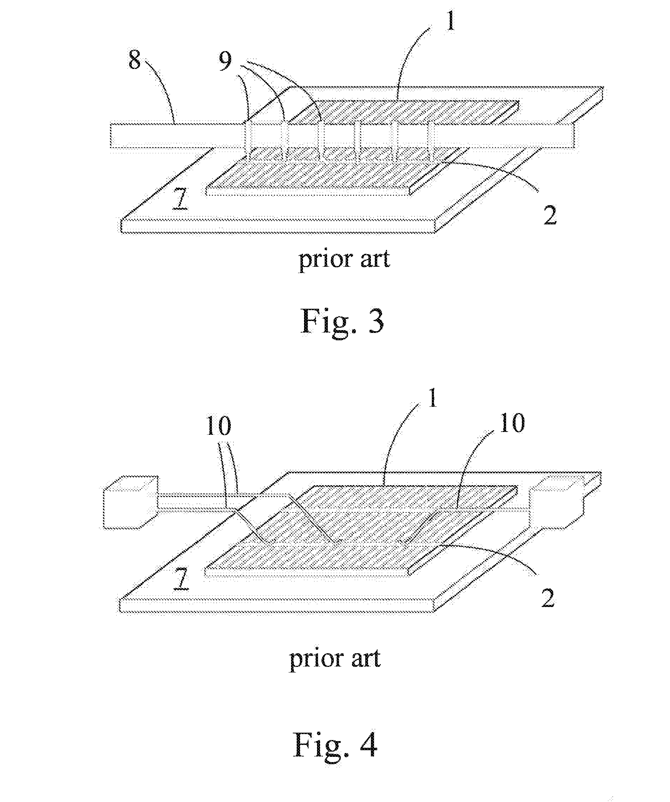

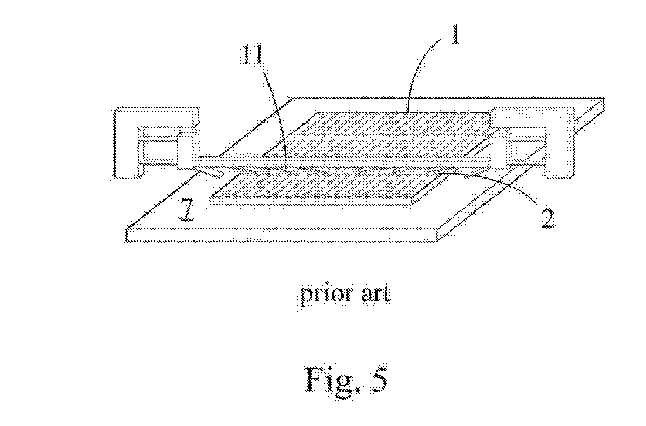

Fig. 3, 4 and 5 show prior art methods for electrically contacting a solar cell 1 as already described above. Fig. 3 shows spring probes comprising a plurality of needle pins 9 mounted on a support bar 8. Fig. 4 shows contacting means formed by bent wires 10. Fig. 5 shows a plurality of thin contact blades 11 formed from one piece with the horizontal supporting bar and extending downwards to the bus bar contacts 2.

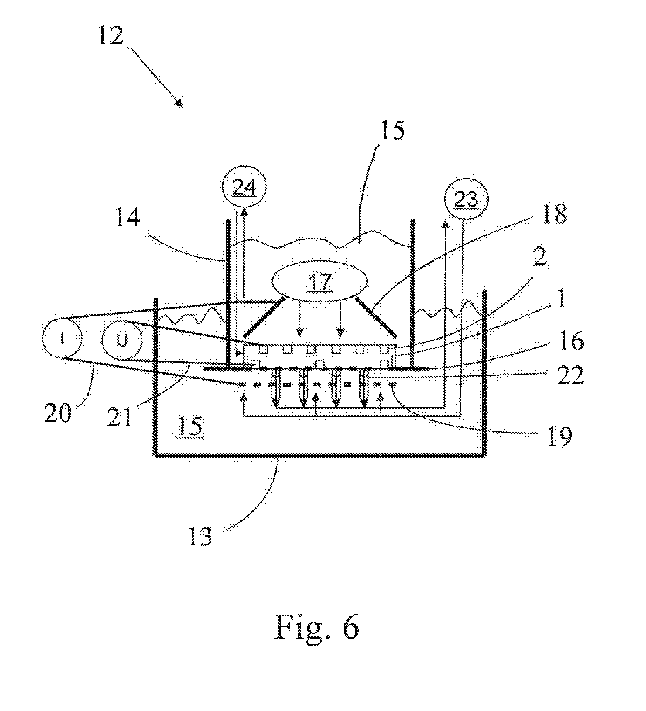

Fig. 6 shows an apparatus 12 for contacting a solar cell 1 according to the invention. Solar cell 1 is placed in a receiving volume of apparatus 12 and sits on a base 16. Base 16 is formed by the base plate of a first fluid chamber 14. During the measurement procedure the topside of solar cell 1 is covered with an electrically conducting fluid 15 which is received by that first fluid chamber 14. The contacts 2, 3 on the topside of solar cell 1 are in electrically conducting communication with the fluid 15.

Electrical transmitting means comprise electrodes 18 which are immersed in the fluid 15 of the first fluid chamber 14 and a cable wire 20 connecting the electrodes 18 with a measurement device I, U (e.g. a voltage/current detector or a voltage/current supply). In such a way, an electrically conducting connection is established between the solar cell contacts 2, 3 and the measurement device I, U via the fluid 15.

A light source 17 is immersed in the fluid 15 and simulates the spectrum of the sun. Such light sources are known from prior art and are also called sun simulators. In the case of electroluminescence, the light source 17 may be replaced by a camera. The camera picks up the emitted light pattern from the surface of the cell. Note that the camera or light source may be placed underneath the cell and the cell's active region may be facing downward or any desired direction.

It is of course possible to contact the backside contacts 4 of the solar cell 1 by mechanical contacting means as for example described above with respect to prior art. In the preferred embodiment of Fig 6, however, the backside of solar cell 1 is also contacted by means of an electrical conducting fluid 15 which is received by a second fluid chamber 13. The fluids of the two fluid chambers are separated from each other and may be identical or different.

The base 16 (base plate of the first fluid chamber 14) has openings or holes which are covered by the solar cell 1 when being received in the measurement position by the receiving volume of apparatus 12. In such a way the fluid of the first fluid chamber 14 is separated from the fluid of the second fluid chamber 13. At the same time the openings or holes (indicated in Fig. 6 by a dashed lined base 16) allow fluid 15 from the second fluid chamber 13 to contact the backside contacts 4 of solar cell 1. An electrode 19, for example formed from a mesh-like structure, is immersed in the fluid 15 of that second fluid chamber 13 and establishes an electrical connection with the measurement device I, U via a cable wire 20. The base may also be omitted. The cell would close the compete gap between the fluid chambers.

Circulation pumps 23, 24 are preferably provided to circulate the fluids in the respective fluid chambers 13, 14 to avoid temperature or concentration gradients.

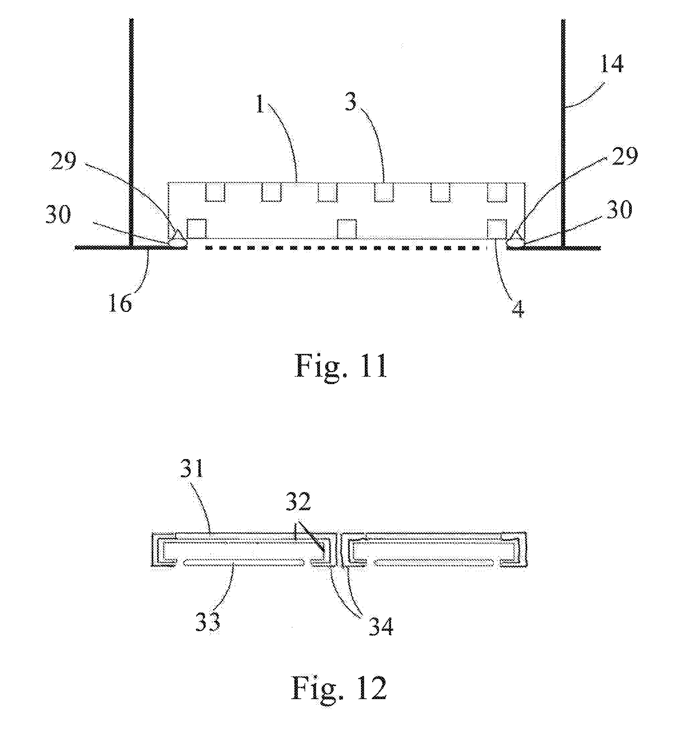

The edge isolation (or trench, as discussed above) of solar cell 1 is indicated schematically by two vertical lines at the left and right edge of solar cell 1 extending from the backside into the volume of the cell. Fig. 11 shows the edge isolation 29 in more detail. This trench runs around the complete perimeter of the cell and isolates the topside from the backside. As can be seen from Fig. 6 the trench region is fully covered by the base 16 thus avoiding a short circuit.

Below the openings of base 16, suction cannulas 22 are indicated. They are used to reliably force (or push down) the solar cell 1 towards the base 16 by negative pressure. They may be connected to a suction unit arranged outside the fluid chamber 13 or connected to a circulating pump 23. Alternatively, the solar cell 1 may be forced towards the base 16 by different flow situations in the first and second fluid chamber 14, 13. A larger flow in the second chamber 13 would cause a Bernoulli effect thus drawing the solar cell 1 towards the second fluid chamber 13.

As can be seen in Fig. 11, a sealing 30 extending around the cell 1 seals the upper fluid chamber 14 against the cell 1. Preferably the sealing 30 completely covers the edge isolation 29 (trenching) of the solar cell 1. The fluid 15 in the two chambers 13, 14 is preferably identical, meaning that they are allowed to touch/mix when the cell 1 is put in position. Therefore, normally the level of the fluid 15 in both chambers will be about equal (not shown for reasons of clarity).

For the invention any electrically conducting fluid may be used, preferably electrolytes containing free ions. Preferably water-based fluids are used. For obtaining a good electrical conductivity a soluble salt is used, e.g. KOH in water or H₂SO₄ in water with some wetting detergents (like alcohol). However, also immersion oils with soluted salts as known from immersion microscopy may be used. It is important that the transmission spectrum of the fluid is known and stable. Preferably, as little light as possible should be absorbed by the fluid. Ni-, Sn- or Ag- based electrolytes are very useful for cells without any metallization and Cu-based electrolytes are useful for cells having already a metallization on it. Particularly, p-type cells having a top n-doping get a metal plating at the n-type layer, because this is the negative pole in the cell. As fluid a low resistivity fluid is preferred. Primary this measurement is not according Standard Test Conditions (STC), the fluid should only have a stable conductivity. The measurements of the cells done with this method can be compared and selected in bins. There is no need to know the exact STC value before lamination of the cells to a module.

If the cells are sensitive to the fluid used, it may be partially covered by a mask. This mask may be removed after the measurement procedure or may remain part of the cell.

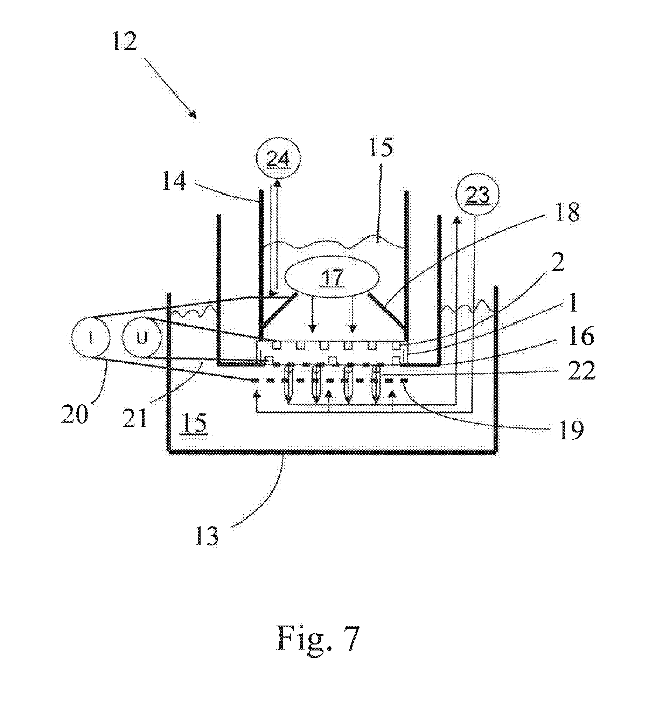

While in the embodiment of Fig. 6 the solar cell receiving volume is part of the fluid space, Fig. 7 shows an alternate embodiment. The solar cell 1 forms the bottom of the upper fluid chamber 14. An intermediate wall/container is arranged between the fluid chambers, separating them from one another. The base 16 is now formed by the bottom of the intermediate wall/container.

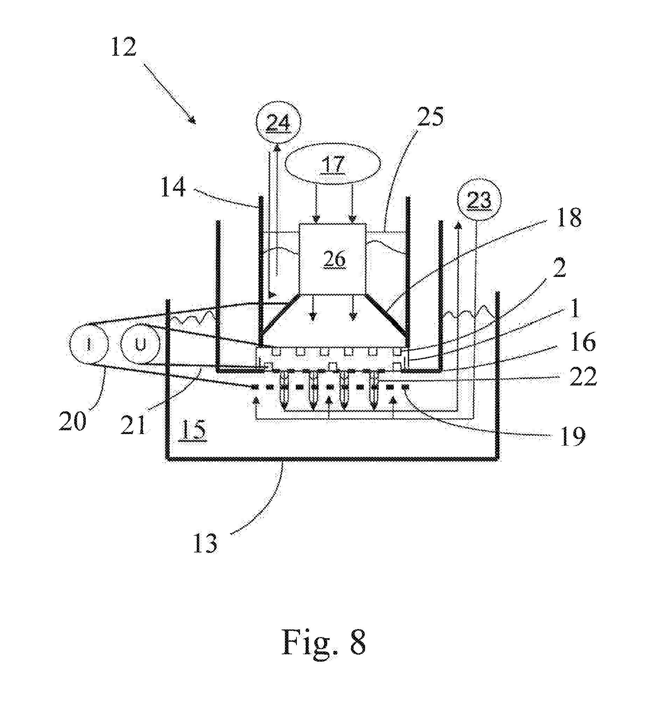

Fig. 8 shows an embodiment with the light source 17 being arranged outside of the fluid 15. Instead, a light conducting means 26 is partially immersed in the fluid 15. The light from light source 17 is directed towards the surface of the light conducting means 26, which is not covered by the fluid 15. The same holds, if a camera is used instead of a light source (electroluminescence).

If the light source/camera is placed outside of the fluid, the surface of the fluid will reflect part of the light and (more importantly) in an undefined manner because of waves on the surface of the fluid. To avoid this situation the light source 17 may be placed in the fluid 15 or, preferably, a (optical) wave guide 26 may be placed in the fluid extending above the fluid to form a defined interface between the air and the fluid. In the latter case an index-matching material may still be used between light source/camera and wave guide 26. Preferably, a shielding 25, e.g. in form of a non-transparent plate or foil, is used to prevent light from entering the fluid 15 in an undefined manner. It is of course possible to arrange the light source or camera also in the lower fluid chamber 13.

Similar holds for a camera, making the defined surface even more important since unevenness in the interface will result in distortions of the image. For the images to remain usable, the light imaged onto the imager of the camera should not reflect inside the wave guide, which is normally the case for e.g. glass fibre cables. In the present case, the light conducting means 26 is much wider than it is long, thereby preventing internal reflections.

Preferably, the optical conducting means 26 is a piece of glass, since this does not absorb the fluid as for example polymers do.

If the cells 1 are finally connected using ribbons 6 extending on the sunny side of the cell (Fig. 2), a mask may be placed above the cell 1 simulating the shading of the cell during normal usage.

In order to facilitate an easy positioning of a solar cell 1, a cell stack (this is how they are shipped and stored) is submerged into the electrically conducting fluid 15 and cell by cell is taken from the cell stack within the fluid to place it over a base (sucking table), preferably without the cells leaving the fluid.

If desired, the fluid, e.g. in form of an electrolyte, can be used to plate metal onto the surface of the cell (electro-plating, chemical plating, or any other type of plating). Moreover, measurements may be done during a plating step that is conducted any way.

As already described above with respect to prior art, the power output is measured in order to determine the efficiency of solar cells. To do so, the voltage between the electrical connections of the solar cell (for a given current) has to be measured. Since this measurement does not draw a current from the cell (or only a very small current), the isolation to the fluid is less critical. The large currents in the fluid generate a voltage drop in the fluid. It is therefore still important to contact the cell directly or at least arrange the electrodes in the fluid very close to the cell. The voltage itself is measured without drawing or emitting any current. A conductive rubber can be e.g. used for voltage contacting.
Since the contacts in the case of voltage measurements (almost) do not have to support a current, the contact does not have to be as good and needles can be used that do not harm the cell.

In practice, a perfect insulation between the fluid chambers can be achieved. However, it has to be noted, that if the isolation between the two fluid chambers 13, 14 is not perfect this would not be a major problem. Since the currents in the fluids are large, one only has to guarantee that the ohmic resistance between the two fluid chambers is much larger than that of the fluid 15, which can be achieved readily.

If the light source 17 or the camera is (partially) immerged in a fluid 15, this fluid may be used for cooling purposes. Also the temperature of the fluid may be controlled as to keep the solar cell at a given temperature, making the measurement even more exact.

With the inventive apparatus and method it is also possible to contact back-contact cells. Back-contact cells are cells that are only contacted on their backside (opposite side to the illuminated, active side). The goals are clear: to prevent a shading of the illuminated side by contacts 2 (bus bars), fingers 3 and ribbons 6 as good as possible. Of course, now the electrons have to be tunneled through the solar cell 1 to the backside.

Fig. 12 shows an example of a back-contact cell having a top layer 31 of e.g. SiNₓ, a n-type material 32 and a p-type material 33. The charges are brought by so called metal wrap-throughs 34 (through-contacts) to the backside. The different contacts 33 and 34, plus and minus, are separated/isolated from each other by a gap.

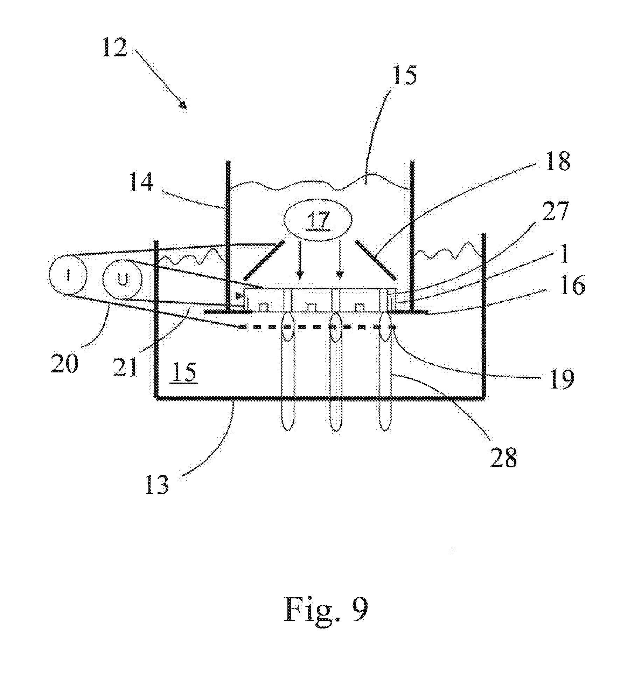

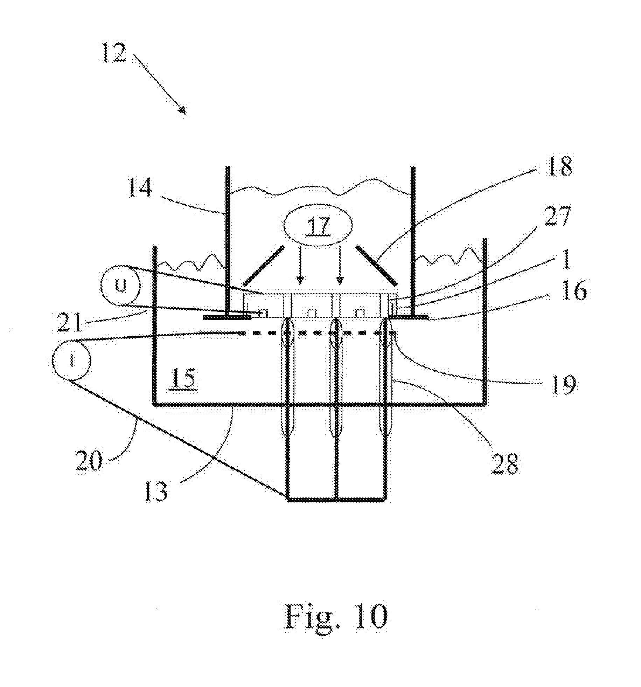

For back-contact cells the fluid cambers need to be such, that the through-contacts are still isolated from the rest of the backside. This can be done in two ways as shown in the Figs. 9 and 10.

Normally, the through-contacts 27 are not electrically isolated on the topside. If this is the case the through-contacts 27 may be isolated on the backside by a plurality of sealing elements 28 as shown in the embodiment of Fig. 9. The topside of the solar cell 1 is still contacted by the fluid 15 in the upper fluid chamber 14.

If the current cannot be picked-up on the topside (through-contacts are electrically isolated on the topside), the sealing elements have to incorporate electrodes/wires for carrying the current as shown in the embodiment of Fig. 10. The electrodes are isolated against the fluid 15 in the lower fluid chamber 13 by means of the sealing elements 28, e.g. in form of sheaths. The electrodes are connected with a cable wire 20 to the measurement device I, U.

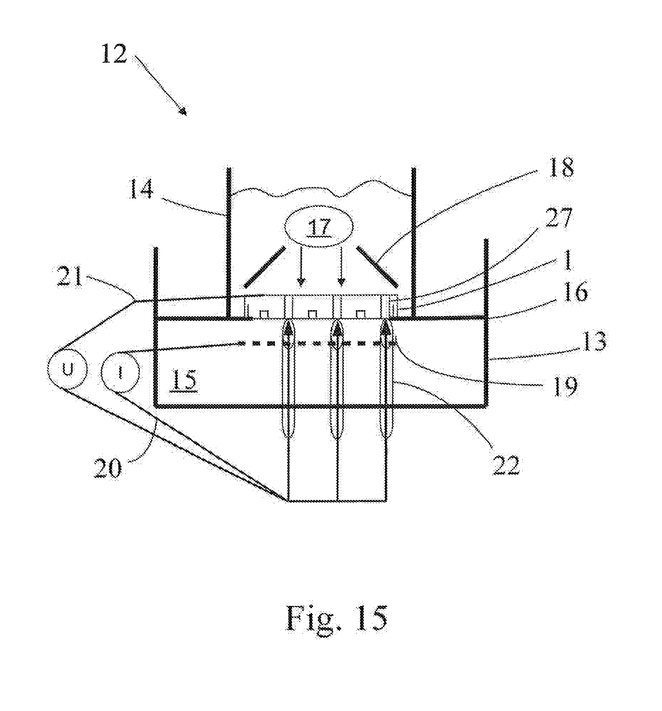

Fig. 15 shows a further embodiment. Electrically conducting fluid 15 is contained in the lower fluid chamber 13. The photovoltaic device 1 closes the lower fluid chamber 13, which is then a closed space. The photovoltaic device 1 is contacted from below by the fluid 15 (e.g. electrolyte) and sucked by suction ducts 22 extending through the fluid chamber 13. Suction ducts 22 contain electrical contacting means for contacting the through contacts 27. The electrical contacting means can be needle contacts abutting against the through contacts 27 or an electrically conducting fluid. The suction ducts 22 are placed in alignment with the through contacts 27 and have two functions: sucking the photovoltaic device 1 and sealing (insulating) the contacting means inside the suction ducts 22 from the outside.

It is possible to increase the level of fluid 15 in the lower fluid chamber 13 not until suction of the photovoltaic device 1 is performed. This helps to prevent the fluid 15 from overflowing from the lower fluid chamber 13 and from flowing into the suction ducts 22.

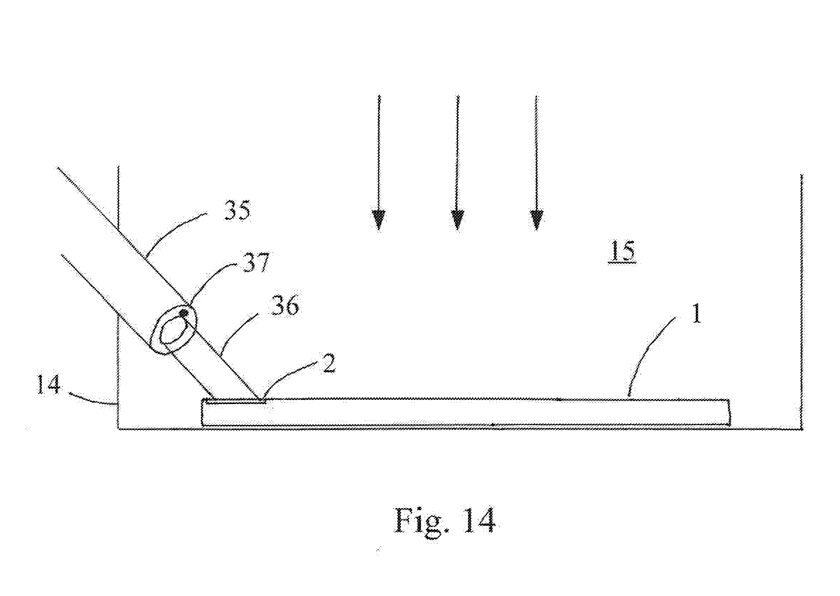

Fig. 14 shows a further embodiment of contacting a photovoltaic device by means of a fluid. Means for directing a jet of fluid 36 to the contact area 2 of the photovoltaic device 1 is formed by a nozzle 35, e.g. in form of a tube, which is arranged with its outlet near to the contact area 2. The nozzle 35 is insulated to the outside, however, has an electrical contact inside of it, e.g. a voltage wire extending inside of the nozzle 35. The electrical contact can also be integrated as part of the nozzle's material.

By flushing the nozzle 35 or tube, the part of electrically conducting fluid 15 (e.g. electrolyte) is separated for a short distance by the jet of fluid 36 coming from the nozzle 35. I.e. the jet temporarily separates the fluid 15 and thus causes an electrical separation (this is due to the fact that the current transport is related to a ion transport in a liquid. The velocity of the jet partially inhibits this transport). The jet of fluid 36 hits the voltage sensible part of the cell. The voltage potential is connected to the electrical contact of the nozzle 35 or tube. The nozzle can be placed outside the active area of the photovoltaic device 1, so the photovoltaic device 1 will not be shaded by the nozzle 35. In an embodiment the nozzle 35 or tube can be transparent and the nozzle electrode can made of a transparent conductive layer. The fluid jet 36 is blended with the other fluid 15, so it will now carry the current.

The fluid jet 36 may be partially or completely submerged in the fluid 15 in the receiving volume. The receiving volume may only be used to collect the fluid after having hit the photovoltaic device 1. The jet of fluid 36 may be used to measure current or voltage. In the former case (current measurement), the part of the photovoltaic device becoming wet is measured, enabling localized measurements. Combination of multiple localized measurements may be used to locate artefacts more precisely. In the latter case (voltage measurement), the jet of fluid 36 is preferably completely submerged and the nozzle 35 is very close to the contact area 2 of the photovoltaic device 1 from which the voltage is measured. Ideally, the jet of fluid 36 is made of the same fluid 15 (e.g. electrolyte) as is in the fluid space. Preferably, the nozzle 35 has near its tip (outlet) an electrical contact 37 for picking up the voltage (see black point in Figure 14). One jet or multiple jets of fluid may be used. The jet or the jets may also be used to push down the photovoltaic device 1 to the base 16.

In other embodiments it is possible to create a temporary film of electrically conducting fluid on the surface(s) of the photovoltaic device. The film may be e.g. produced by a plurality of nozzles.

The invention has been described with standard solar cells and back-contact solar cells. However, it has to mentioned, that the inventive method is applicable to any type of solar cell.

### List of reference signs

- 1 -: solar cell
- 2 -: contact area
- 3 -: fingers
- 4 -: electrically conducting cover
- 5 -: solar cell module
- 6 -: connection ribbons
- 7 -: base
- 8 -: support bar
- 9 -: needle pins
- 10 -: bent wires
- 11 -: blades
- 12 -: apparatus
- 13 -: second fluid chamber
- 14 -: first fluid chamber
- 15 -: electrically conducting fluid
- 16 -: base
- 17 -: light source
- 18 -: electrode in the first fluid chamber
- 19 -: electrode in the second fluid chamber
- 20 -: cable to measurement device
- 21 -: cable to measurement device
- 22 -: suction ducts
- 23 -: circulation pump for the second fluid chamber
- 24 -: circulation pump for the first fluid chamber
- 25 -: light shielding
- 26 -: light conducting means
- 27 -: trough-contacts
- 28 -: sealing elements
- 29 -: edge isolation
- 30 -: sealing
- 31 -: SiNₓ layer
- 32 -: n-type material
- 33 -: p-type material
- 34 -: metal wrap-through (MWT)
- 35 -: nozzle
- 36 -: fluid jet
- 37 -: electrical contact
- I -: ampere-meter or current source
- U -: voltmeter or voltage source

## Claims

1. Apparatus (12) for electrically contacting a photovoltaic device (1, 5) the photovoltaic device (1,5) having an electrical contact area (2), the apparatus (12) comprising:
a receiving volume for at least partially receiving the photovoltaic device (1, 5),
at least one fluid space for receiving an electrically conducting fluid (15), the fluid space being arranged with respect to the receiving volume such that a fluid (15) in the fluid space at least partially covers the electrical contact area (2) of the photovoltaic device (1, 5) when being received by said receiving volume, and
electrical transmitting means (18; 19, 20) for connecting the fluid (15) in the fluid space with a measurement device in an electrically conducting manner.

2. Apparatus according to claim 1, wherein the apparatus (12) comprises a base (16) for supporting the photovoltaic device (1, 5) when being received by the receiving volume, and wherein preferably the base (16) is formed with holes.

3. Apparatus according to claim 1 or 2, wherein the fluid space is formed by a fluid chamber (13, 14).

4. Apparatus according to claim 3, wherein a base (16) for supporting the photovoltaic device is formed by a wall, preferably the base plate (16), of a fluid chamber (14).

5. Apparatus according to any of claims 1 to 4, wherein the apparatus (12) comprises two fluid spaces for contacting different electrical contact areas (2, 4) of the photovoltaic device (1, 5), the fluid spaces being separated from each other.

6. Apparatus according to claim 5, wherein the fluid spaces are arranged on opposite sides of the receiving volume, such that the fluids (15) cover opposite sides of the photovoltaic device (1, 5).

7. Apparatus according to any of claims 1 to 6, wherein the apparatus (12) comprises mechanical contacting means for electrically contacting different electrical contact areas (4) of the photovoltaic device (1, 5) in a mechanical manner.

8. Apparatus according to any of the preceding claims, preferably for use in a measurement equipment, wherein the apparatus (12) comprises at least one source of electromagnetic radiation (17), preferably a light source, and wherein preferably the source of electromagnetic radiation (17) or an electromagnetic radiation conducting means (26) being in communication with said source of electromagnetic radiation (17) is directed to the receiving volume of the photovoltaic device (1, 5).

9. Apparatus according to claim 8, wherein the source of electromagnetic radiation (17) or an electromagnetic radiation conducting means (26) being in communication with said source of electromagnetic radiation (17) is at least partially immersed in the fluid of the fluid space.

10. Apparatus according to any of the preceding claims, wherein the electrical transmitting means comprises at least one electrode (18) which is at least partially immersed in the fluid of the fluid space, and wherein preferably the electrode (18) is formed as a light reflector.

11. Apparatus according to any of the preceding claims, preferably for use in a measurement equipment, the apparatus (12) comprising sensor means for detecting electromagnetic radiation coming from the photovoltaic device (1, 5).

12. Apparatus according to any of the preceding claims, wherein the apparatus (12) comprises means (30) for abutting the photovoltaic device (1, 5) in a fluid-tight manner.

13. Apparatus according to any of the preceding claims, wherein the apparatus (12) comprises sealings (28) adapted to seal thru contacts of the photovoltaic device (1, 5) from the fluid (15).

14. Apparatus according to any of the preceding claims, wherein the apparatus (12) comprises means for directing a jet of fluid (36) onto a region of the contact area (2), wherein preferably the means for directing a jet of fluid (36) is a nozzle (35).

15. Method for electrically contacting a photovoltaic device (1, 5), in an apparatus (12) according to any of the preceding claims, particularly for testing its performance, the photovoltaic device (1, 5) having an electrical contact area (2), the method comprising the steps of:
providing an electrically conducting fluid (15) in a fluid space and receiving a photovoltaic device (1, 5) in a receiving volume as to establish an electrical contact between the electrically conducting fluid (15) with an electrical contact area (2) of the photovoltaic device (1, 5).
